# EUROPÄISCHE PATENTSCHRIFT

(11) **EP 1 960 176 B1**
(45) Veröffentlichungstag und Bekanntmachung des Hinweises auf die Patenterteilung: **29.09.2010**
(21) Anmeldenummer: 06829225.9
(22) Anmeldetag: 01.12.2006
(51) Int. Cl.: B29C 41/22

(54) **VERFAHREN ZUR HERSTELLUNG EINES WENIGSTENS ZWEI OBERFLÄCHENZONEN AUFWEISENDEN AUSSTATTUNGSTEILS FÜR EIN KRAFTFAHRZEUG UND FORMWERKZEUG**
METHOD FOR THE PRODUCTION OF A PIECE OF MOTOR VEHICLE EQUIPMENT COMPRISING AT LEAST TWO SURFACE ZONES AND FORM TOOL
PROCEDE DE FABRICATION D'UNE PIECE D'EQUIPEMENT INTERIEUR COMPORTANT AU MOINS DEUX ZONES DE SURFACE POUR UN VEHICULE AUTOMOBILE ET OUTIL DE FORMAGE

(30) Priorität: 07.12.2005 DE 102005058591
(43) Veröffentlichungstag der Anmeldung: 27.08.2008
(73) Patentinhaber: Johnson Controls Interiors GmbH & Co. KG, 47929 Grefrath (DE)
(72) Erfinder: HENDRIX, Jörg, 41334 Nettetal (DE); BOGDANOV, Natalie, 47918 Tönisvorst (DE); CEMPULIK, Peter, 59379 Selm (DE); BRÜCKNER, Hubert, 40899 Erkrath (DE)
(74) Vertreter: Wolff, Felix
(86) Internationale Anmeldenummer: PCT/EP2006/011534
(87) Internationale Veröffentlichungsnummer: WO 2007/065600

(56) Entgegenhaltungen:
- EP-A- 0 972 625
- EP-A- 1 717 006
- EP-A1- 0 475 004
- WO-A-93/23237
- DE-A1- 3 919 723
- DE-A1- 10 062 825
- DE-A1- 10 305 688
- DE-C1- 3 911 485
- JP-A- 2 141 213
- US-A- 4 940 012
- US-A- 6 071 619

## Beschreibung

Die vorliegende Erfindung betrifft ein Verfahren zur Herstellung eines wenigstens zwei Oberflächenzonen aufweisenden Ausstattungsteils für ein Kraftfahrzeug, insbesondere ein Innenausstattungsteil, gemäß dem Oberbegriff des Patentanspruchs 1, sowie ein Formwerkzeug gemäß dem Oberbegriff des Patentanspruchs 4.

Ein solches Verfahren zur Herstellung eines Ausstattungsteils ist allgemein bekannt. Beispielsweise ist aus der deutschen Patentschrift DE 39 11 485 C1 ein Verfahren zur Herstellung einstückiger, dünnwandiger, biegeweicher, sichtseitig zwei- oder mehrzonig strukturierter Kunststoffkörper aus Reaktionsharzen zur Oberflächengestaltung von Ausstattungsteilen für Kraftfahrzeuge bekannt. Weiterer Stand der Technik sind die US-A-6,071,61 9, die DE 39 19 723 A1, die EP-A1-0 475 004, die EP-A-0 972 625, die US-A-4,940,012, die WO 93/23237, die EP-A-1 717 006, die DE 103 05 688 A1, die DE 100 62 825, die DE 39 11 485 sowie die JP 02 141 213, die als nächstliegender Stand der Technik angesehen wird und den Oberbegriff von Patentanspruch 1 bildet. Nachteilig hierbei ist es jedoch, dass die Abgrenzung der unterschiedlich zu gestaltenden Oberflächenzonen schwierig und lediglich ungenau möglich ist, so dass den optischen Anforderungen an das Kraftfahrzeugausstattungsteil nicht Rechnung getragen werden kann.

Aufgabe der vorliegenden Erfindung ist es, ein Verfahren zur Herstellung eines wenigstens zwei Oberflächenzonen aufweisenden Ausstattungsteils für ein Kraftfahrzeug, insbesondere ein Innenausstattungsteil, zu schaffen, welches eine genaue Abgrenzung zwischen verschiedenen Oberflächenzonen erlaubt und diese Abgrenzung einerseits mit der notwendigen optischen Güte ermöglicht und andererseits ein einfaches, robustes und kostengünstig darzustellendes Herstellungsverfahren bereitstellt.

Diese Aufgabe wird durch ein Verfahren gemäß Patentanspruch 1 sowie durch ein Formwerkzeug gemäß Patentanspruch 4 gelöst.

Vorteilhafte weiterbildungen der Erfindung sind Gegenstand der abhängigen Ansprüche 2 und 3. Hierdurch ist es möglich, dass eine genaue Abgrenzung der beiden Oberflächenzonen realisierbar ist, ohne dass es zu optisch unschönen Erscheinungen am Übergang zwischen der ersten und der zweiten Oberflächenzone kommt. Herkömmlicherweise führt ein sogenannter "Bridging-Effekt" dazu, dass bei einer Abdeckung der zweiten Oberflächenzone durch eine Werkzeugabdeckung, die in Kontakt mit dem ersten Oberflächenmaterial steht, beim Abnehmen der Werkzeugabdeckung ein unschönes Abreißen des ersten Oberflächen materials wahrscheinlich ist. Mit dem erfindungsgemäßen Verfahren ist daher eine deutlich sauberere Trennlinie zwischen der ersten und der zweiten Oberflächenzone bei dem Innenausstattungsteil möglich.

Erfindungsgemäß ist ferner vorgesehen, dass zwischen der Werkzeugabdeckung und der Rippe ein Spalt vorgesehen ist, durch den während des Aufbringens des ersten Oberflächenmaterials ein Fluid, insbesondere Luft, ströme. Hierdurch wird die Wahrscheinlichkeit des bereits angesprochenen "Brtdging-Effekts" weiter reduziert und ferner eine noch bessere Abtrennung der verschiedenen Oberflächenzonen dadurch ermöglicht, dass Materialtropfen bzw. Materialpartikel des ersten Oberflächenmaterials, welches beispielsweise mittels eines Sprühverfahrens aufgebracht wird, jedenfalls nicht in den Bereich der zweiten Oberflächenzone gelangen kann.

Erfindungsgemäß ist vorgesehen, dass die Werkzeugabdeckung (Maske) an ihrer der Rippe abgewandten Kante gegenüber dem Formwerkzeug abgedichtet wird. Hierdurch ist es mit einfachen Mitteln möglich, das Herstellungsverfahren kostengünstig zu halten, weil lediglich ein geringer Druck des zwischen der Werkzeugabdeckung und der Rippe durchströmenden Fluids notwendig ist.

Ferner ist bevorzugt, dass nach dem Aufbringen des ersten Oberflächenmaterials und einer Entfernung der Werkzeugabdeckung ein zweites Oberflächenmaterial in der zweiten Werkzeugzone und im Bereich der Rippe aufgebracht wird. Hierdurch ist es nach dem Aufbringen des ersten Obertlächenmaterials sehr einfach möglich, die zweite bzw. generell eine weitere Oberflächenzone des Ausstattungsteils hinsichtlich seiner Oberfläche mit dem zweiten Oberflächenmaterial zu gestalten. Weiterhin wird dadurch eine gute Verbindung zwischen dem ersten Oberflächenmaterial und dem zweiten Oberflächenmaterial an der Stelle der Rippe ermöglicht, so dass das Innenausstattungsteil an der Grenzfläche zwischen dem ersten Oberflächen material und dem zweiten Oberflächen material nicht geschwächt ist.

Ein weiterer Gegenstand der vorliegenden Erfindung ist ein Formwerkzeug gemäß Patentanspruch 4.

Hierdurch ist es mit einfachen Mitteln möglich, das erfindungsgemäße Herstellungsverfahren für ein Ausstattungsteil durchzuführen und eine saubere Trennung zwischen den Oberflächenzonen zu erreichen. Unter einer spitz zulaufenden Form wird erfindungsgemäß insbesondere eine mittige Spitze, bezogen auf die Ränder der Rippe, verstanden. Eine zum einen oder dem anderen Rand verschobene Spitze ist jedoch alternativ oder lediglich in Teilbereichen auch möglich. Unter einer stumpf zulaufenden Form wird erfindungsgemäß insbesondere eine oben flache Rippe verstanden. Unter rund zulaufenden Form wird erfindungsgemäß insbesondere eine oben abgerundete, d.h. im wesentlichen halbkreisförmige. Rippe verstanden.

Ausführungsbeispiele der Erfindung sind in den Zeichnungen dargestellt und in der nachfolgenden Beschreibung näher erläutert.
- **Figur 1**: zeigt schematisch eine Schnittdarstellung durch ein Formwerkzeug mit einer ersten und einer zweiten Werkzeugzone,
- **Figur 2**: eine schematische Schnittdarstellung durch das Formwerkzeug während des Aufbringens eines ersten Oberflächenmatenais in der ersten Werkzeugzone,
- **Figur 3, 4 und 5**: zeigen schematisch die Herstellung verschiedener Ausführungsformen eines Ausstattungsteils mittels dem Formwerkzeug und einem weiteren Formwerkzeug und
- **Figur 6**: zeigt schematisch einen Teil der Sichtseite eines erfindungsgemäßen Ausstattungsteils.

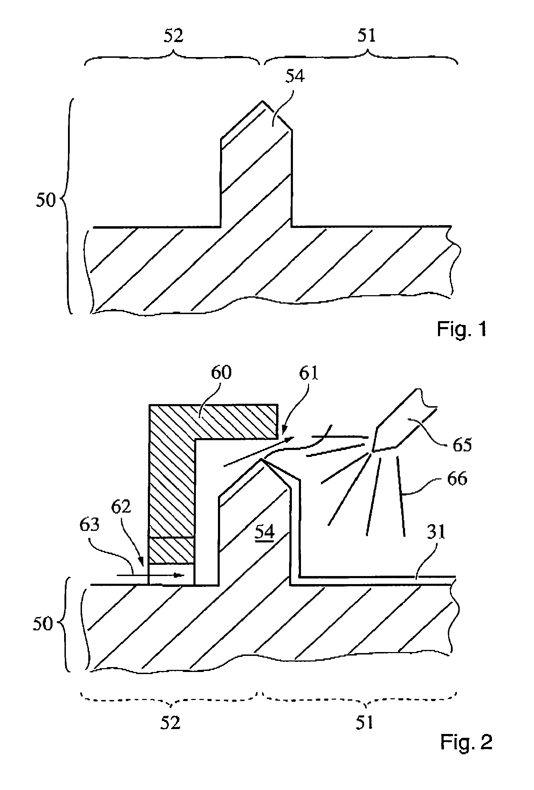

In **Figur 1** ist ein Formwerkzeug 50 bzw. ein Ausschnitt eines solchen Formwerkzeugs 50 schematisch in einer Schnittdarstellung dargestellt. Das Formwerkzeug weist eine Rippe 54 auf, die selbstverständlich in der Schnittdarstellung lediglich als eine hervorstehende Spitze bzw. eine Ausbuchtung des Formwerkzeuges 50 hergestellt ist. Die Rippe 54 teilt das Formwerkzeug 50 in eine erste Werkzeugzone 51 und eine zweite Werkzeugzone 52.

In **Figur 2** ist schematisch dargestellt, wie ein erstes Oberflächenmaterial 31 (zur Herstellung einer ersten Oberflächenzone eines später zu beschreibenden Ausstattungsteils) in der ersten Werkzeugzone 51 mittels eines Aufbringungshilfsmittels 65 aufgebracht wird. Bei dem Aufbringungshilfsmittel 65 handelt es sich insbesondere um eine Sprühvorrichtung oder Spray-Vorrichtung zur Aufbringung des erste Oberflächenmaterials 31.

Während des Aufbringens des ersten Oberflächenmaterials 31 in die erste Werkzeugzone 51 wird die zweite Werkzeugzone 52 mittels einer Werkzeugabdeckung 60 abgedeckt. Hierdurch werden (schematisch mittels flugbahnartigen Strichen in **Figur 2** dargestellte und von dem Aufbringungshilfsmittel 65 abgegebene) Teilchen 66 des ersten Oberflächenmaterials 31 wirksam daran gehindert, in den Bereich der zweiten Werkzeugzone 52 zu gelangen. Dies wird insbesondere durch eine besondere Geometrie der Rippe 54 realisiert. Hierzu ist beispielsweise die Rippe 54 spitz zulaufend vorgesehen. Erfindungsgemäße ist es jedoch auch möglich, dass die Rippe 54 anders geformt ist, beispielsweise an ihrer Spitze rund vorgesehen ist oder dass die Spitze der Rippe 54 in Richtung auf die erste Werkzeugzone 51 oder in Richtung auf die zweite Werkzeugzone 52 hin verschoben, d. h. asymmetrisch geformt, vorgesehen ist.

Besonders vorteilhaft ist es, dass ein Fluid 61, insbesondere Luft, zwischen der Werkzeugabdeckung 60 und der zweiten Werkzeugzone 52 des Formwerkzeugs 50 derart hindurchströmt, dass eine Ablagerung von Teilchen 66 des ersten Oberflächenmaterials 31 im Bereich der zweiten Werkzeugzone 52 verhindert wird. Hierzu ist insbesondere vorgesehen, dass zwischen der Werkzeugabdeckung 60 und der Rippe 54 bzw, insbesondere zwischen der Werkzeugabdeckung 60 und der Spitze der Rippe 54 ein Spalt 61 gebildet ist, durch den das Fluid 63 hindurchströmt. Hierdurch ist es noch effektiver (als bereits durch die Formgebung der Rippe 54) möglich, die Ablagerung der Teilchen 66 zu verhindern. Auf der der Rippe 54 abgewandten Kante 62 bzw. Seite 62 ist die Werkzeugabdeckung 60 insbesondere gegenüber der zweiten Werkzeugszone 52 des Formwerkzeuges 50 abgedichtet vorgesehen. Erfindungsgemäß sind dort Öffnungen zur Durchleitung des Fluids 63 an dieser Stelle der Werkzeugabdeckung 60 vorhanden, wie in der Zeichnung angedeutet.

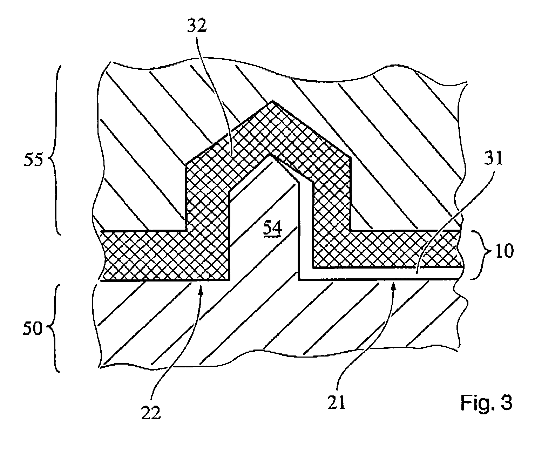

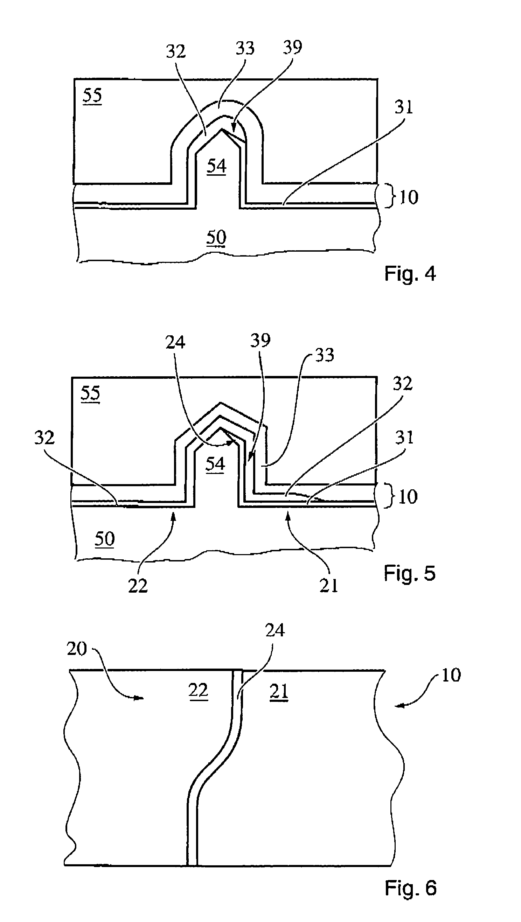

In **Figur 3** ist eine komplette Form umfassend das Formwerkzeug und ein weiteres Formwerkzeug 55 schematisch im Querschnitt dargestellt. Mittels einer solchen Form ist es möglich, ein Innenausstattungsteil 10 beidseitig zu formen. Das Innenausstattungsteil umfasst auf seiner Sichtseite 20 (Figur 6) in einer ersten Oberflächenzone 21 das erste Oberflächenmaterial 31 und in einer zweiten Oberflächenzone 22 das zweite Oberflächenmaterial 32. Mittels der Rippe 54 des Formwerkzeuges 50 wird im Übergangsbereich zwischen der ersten und zweiten Oberflächenzone 21, 22 eine rillenförmige Ausnehmung 24 (Figur 5) in dem Ausstattungsteil 10 realisiert. Diese rillenförmige Ausnehmung 24 ist selbstverständlich komplementär zu der Rippe 54 geformt und weist daher erfindungsgemäß insbesondere eine spitz zulaufende oder stumpf zulaufende oder rund zulaufende Formgebung auf. Bei der Ausführungsform gemäß der **Figur 3** weist das Ausstattungsteil 10 im wesentlichen das zweite Oberflächenmaterial 32 auf, welches lediglich in der ersten Oberflächenzone 21 durch das erste Oberflächenmaterial 31 abgedeckt ist.

In den **Figuren 4 und 5** sind weitere Ausführungsbeispiele der Herstellung des Ausstattungsteils 10 bzw. des Ausstattungsteils 10 angegeben, bei denen neben dem ersten Oberflächenmaterial 31 und dem zweiten Oberflächenmaterial 32 ein Rückseitenmaterial 33 vorhanden ist, welches insbesondere zumindest hinsichtlich der Sichtseite des Ausstattungsteils 10 vollständig durch die Oberflächenmaterialien 31, 32 abgedeckt ist. Hierdurch ist es erfindungsgemäß möglich, dass zur Realisierung der für das Ausstattungsteil 10 auf seiner Sichtseite 20 notwendigen Materialeigenschaften die Oberflächenmaterialien 31, 32 Verwendung finden und - etwa zur Realisierung der notwendigen Stabilität des Ausstattungsteils 10 oder zur Realisierung anderer Eigenschaften des Ausstattungsteils 10 - ein anderes Material, nämlich das Rückseitenmaterial 33 Verwendung findet, welches beispielsweise erheblich kostengünstiger als die Oberflächenmaterialien 31, 32 gewählt werden kann, insbesondere auch deswegen, weil die Anforderungen an das Rückenseitenmaterial 33 deshalb geringer sein können, weil es durch andere Materialien etwa vor einer Sonnenlichteinwirkung oder dergleichen geschützt vorgesehen sein kann. In **Figur 4** ist speziell das erste und zweite Oberflächenmaterial 31, 32 lediglich in einem vergleichsweise schmalen Überlappbereich 39 zwischen der ersten Oberflächenzone 21 und der zweiten Oberflächenzone 22 vorgesehen. In diesem Überlappbereich 39 ist insbesondere eine stoffschlüssige Verbindung des ersten mit dem zweiten Oberflächenmaterials 31, 32 realisiert. In **Figur 5** ist in einer weiteren Ausführungsform der Überlappbereich 39 erheblich ausgedehnter vorgesehen, nämlich im wesentlichen umfassend die komplette Rückseite des ersten Oberflächenmaterials 31, ähnlich wie in **Figur 3****,** wobei jedoch dort das Bezugszeichen nicht verwendet ist.

In **Figur 6** ist schematisch ein Ausschnitt aus der Vorderseite bzw. Sichtseite 20 des Ausstattungsteils 10 dargestellt, wobei die erste Oberflächenzone 21, die zweite Oberflächenzone 22 und die zwischen diesen angeordnete rillenförmige Ausnehmung 24 erkennbar ist.

Zum Einsatz kommen als Oberflächenmaterialien 31, 32 insbesondere Materialien, die den Spezifikationsanforderungen (hinsichtlich Abrieb, Beleuchtungsfestigkeit bzw. Lichtechtheit, etc.) genügen, insbesondere auf flüssiger oder pulverförmiger Basis, und die sich fest miteinander bzw. mit dem Rückseitenmaterial 33 (auch Gießmaterial genannt) verbinden. Bevorzugt sind Lacksysteme auf PUR oder Acrylbasis in flüssiger oder fester Form, bevorzugt reagierende Systeme.
Das Ausstattungsteil 10 ist insbesondere als Innenausstattungsteil 10 eines Kraftfahrzeugs vorgesehen, kann jedoch auch als ein Außenausstattungsteil eines Kraftfahrzeugs oder als ein sonstiges Spritzgussausstattungsteil, beispielsweise im Wohnbereich oder dergleichen, vorgesehen sein. Hierbei kann es sich bei dem Ausstattungsteil insbesondere um eine Cockpitverkleidung, eine Türverkleidung, eine Dachhimmeiverkleidung, eine Sitzverkleidung, eine Kofferraumverkleidung, eine Stoßstange, oder sonstige Ausstattungsteile handeln.

### Bezugszeichenliste

- 10: Ausstattungsteil
- 20: Sichtseite
- 21: erste Oberflächenzone
- 22: zweite Oberflächenzone
- 24: Ausnehmung
- 31: erstes Oberflächenmaterial
- 32: zweites Oberflächenmaterial
- 33: Rückseitenmaterial
- 39: Überlappbereich
- 50: Formwerkzeug
- 51: erste Werkzeugzone
- 52: zweite Werkzeugzone
- 54: Rippe
- 55: weiteres Formwerkzeug
- 60: Werkzeugabdeckung
- 61: Spalt
- 62: Kante
- 63: Fluid, insbesondere Luft
- 65: Aufbringungshilfsmittel
- 66: Teilchen bzw. Partikel des ersten Oberflächenmaterials

## Patentansprüche

1. Verfahren zur Herstellung eines wenigstens zwei Oberflächenzonen (21, 22) aufweisenden Ausstattungsteils (10) für ein Kraftfahrzeug, insbesondere ein lnnenausstattungsteil (10), wobei ein Formwerkzeug (50) eine der ersten Oberflächenzone (21) entsprechende erste Werkzeugzone (51) und eine der zweiten Oberflächenzone (22) entsprechende zweite Werkzeugzone (52) aufweist, wobei das Formwerkzeug (50) zwischen der ersten Werkzeugzone (51) und der zweiten Werkzeugzone (52) eine Rippe (54) aufweist, wobei ein erstes Oberflächenmaterial (31) in der ersten Werkzeugzone (51) auf das Formwerkzeug (50) aufgebracht wird und wobei während des Aufbringens des ersten Oberflächenmaterials (31) die zweite Werkzeugzone (52) zumindest im Bereich entlang der Rippe (54) mittels einer Werkzeugabdeckung (60) abgedeckt wird, **dadurch gekennzeichnet, dass** zwischen der Werkzeugabdeckung (60) und der Rippe (54) ein Spalt (61) vorgesehen ist, durch den während des Aufbringens des ersten Oberflächenmaterials (31) ein Fluid, insbesondere Luft, strömt, wobei die Werkzeugabdeckung (60) an ihrer der Rippe (54) abgewandten Kante (62) gegenüber dem Formwerkzeug (50) abgedichtet wird und dort Öffnungen aufweist durch die das Fluid (63) durchgeleitet wird.

2. Verfahren nach Anspruch 1, **dadurch gekennzeichnet, dass** nach dem Aufbringen des ersten Oberflächenmaterials (31) und einer Entfernung der Werkzeugabdeckung (60) ein zweites Oberflächenmaterial (32) in der zweiten Werkzeugzone (52) und im Bereich der Rippe (54) aufgebracht wird.

3. Verfahren nach einem der vorhergehenden Ansprüche, **dadurch gekennzeichnet, dass** mittels eines zusammen mit dem Formwerkzeug (50) eine im wesentlichen geschlossene Gussform bildendes weiteres Formwerkzeug (55) entweder ein Rückseitenmaterial (33) auf das erste und zweite Oberflächenmaterial (31, 32) oder das zweite Oberflächenmaterial (32) auf das erste Oberflächenmaterial (31) aufgebracht wird.

4. Formwerkzeug (50) zur Herstellung eines wenigstens zwei Oberflächenzonen (21, 22) aufweisenden Ausstattungsteils (10) für ein Kraftfahrzeug, insbesondere ein Innenausstattungsteil (10), wobei das Formwerkzeug (50) eine der ersten Oberflächenzone (21) entsprechende erste Werkzeugzone (51) und eine der zweiten Oberflächenzone (22) entsprechende zweite Werkzeugzone (52) aufweist, wobei das Formwerkzeug (50) ferner zwischen der ersten Werkzeugzone (51) und der zweiten Werkzeugzone (52) eine Rippe (54) aufweist, die im Querschnitt im wesentlichen spitz zulaufend vorgesehen ist, **dadurch gekennzeichnet, dass** zwischen der Werkzeugabdeckung (60) und der Rippe (54) ein Spalt (61) vorgesehen ist, durch den während des Aufbringens des ersten Oberflächenmaterials (31) ein Fluid, insbesondere Luft, strömt, wobei die Werkzeugabdeckung (60) an ihrer der Rippe (54) abgewandten Kante (62) gegenüber dem Formwerkzeug (50) abgedichtet ist und dort Öffnungen aufweist die das Fluid (63) durchleiten.

## Claims

1. Method for producing a piece of trim (10) intended for a motor vehicle and comprising at least two surface zones (21, 22), in particular a piece of interior trim (10), wherein a mould (50) has a first mould zone (51), corresponding to the first surface zone (21), and a second mould zone (52), corresponding to the second surface zone (22), wherein the mould (50) has a rib (54) between the first mould zone (51) and the second mould zone (52), wherein a first surface material (31) is applied to the mould (50) in the first mould zone (51) and wherein the second mould zone (52) is covered at least in the region along the rib (54) by means of a mould cover (60) during the application of the first surface material (31), **characterized in that** a gap (61) through which a fluid, in particular air, flows during the application of the first surface material (31) is provided between the mould cover (60) and the rib (54), wherein the mould cover (60) is sealed with respect to the mould (50) at the edge (62) of said cover that is facing away from the rib (54) and has openings there through which the fluid (63) is passed.

2. Method according to Claim 1, **characterized in that**, after the application of the first surface material (31) and removal of the mould cover (60), a second surface material (32) is applied in the second mould zone (52) and in the region of the rib (54).

3. Method according to one of the preceding claims, **characterized in that** either a rear-side material (33) is applied to the first and second surface materials (31, 32) or the second surface material (32) is applied to the first surface material (31) by means of a further mould (55), which together with the mould (50) forms a substantially closed casting mould.

4. Mould (50) for producing a piece of trim (10) intended for a motor vehicle and comprising at least two surface zones (21, 22), in particular a piece of interior trim (10), wherein the mould (50) has a first mould zone (51), corresponding to the first surface zone (21), and a second mould zone (52), corresponding to the second surface zone (22), wherein the mould (50) also has a rib (54) between the first mould zone (51) and the second mould zone (52), the rib being provided such that it substantially tapers to a point in cross section, **characterized in that** a gap (61) through which a fluid, in particular air, flows during the application of the first surface material (31) is provided between the mould cover (60) and the rib (54), wherein the mould cover (60) is sealed with respect to the mould (50) at the edge (62) of said cover that is facing away from the rib (54) and has openings there through which the fluid (63) passes.

## Revendications

1. Procédé de fabrication d'une pièce d'équipement (10) pour un véhicule automobile, présentant au moins deux zones de surface (21, 22), en particulier une pièce d'équipement intérieur (10), un outil de formage (50) présentant une première zone d'outil (51) correspondant à la première zone de surface (21) et une deuxième zone d'outil (52) correspond à la deuxième zone de surface (22), l'outil de formage (50) présentant entre la première zone d'outil (51) et la deuxième zone d'outil (52) une nervure (54), un premier matériau de surface (31) étant appliqué dans la première zone d'outil (51) sur l'outil de formage (60) et pendant l'application du premier matériau de surface (31), la deuxième zone d'outil (52) étant recouverte au moins dans la région le long de la nervure (54) au moyen d'un recouvrement d'outil (60), **caractérisé en ce qu'**entre le recouvrement d'outil (60) et la nervure (54) est prévue une fente (61), à travers laquelle, pendant l'application du premier matériau de surface (31), s'écoule un fluide, en particulier de l'air, le recouvrement d'outil (60) étant étanché au niveau de son arête (62) opposée à la nervure (54) par rapport à l'outil de formage (50) et présentant à cet endroit des ouvertures à travers lesquelles est guidé le fluide (63).

2. Procédé selon la revendication 1, **caractérisé en ce qu'**après l'application du premier matériau de surface (31) et un enlèvement du recouvrement d'outil (60), un deuxième matériau de surface (32) est appliqué dans la deuxième zone d'outil (52) et dans la région de la nervure (54).

3. Procédé selon l'une quelconque des revendications précédentes, **caractérisé en ce qu'**au moyen d'un autre outil de formage (55) formant conjointement avec l'outil de formage (50) un moule de coulée essentiellement fermé, soit un matériau de côté arrière (33) est appliqué sur le premier et le deuxième matériau de surface (31, 32), soit le deuxième matériau de surface (32) est appliqué sur le premier matériau de surface (31).

4. Outil de formage (50) pour fabriquer une pièce d'équipement (10) pour un véhicule automobile, présentant au moins deux zones de surface (21, 22), en particulier une pièce d'équipement intérieur (10), dans lequel l'outil de formage (50) présente une première zone d'outil (51) correspondant à la première zone de surface (21) et une deuxième zone d'outil (52) correspond à la deuxième zone de surface (22), l'outil de formage (50) présentant en outre entre la première zone d'outil (51) et la deuxième zone d'outil (52) une nervure (54), qui est prévu de manière à se terminer essentiellement en pointe en section transversale, **caractérisé en ce qu'**entre le recouvrement d'outil (60) et la nervure (54) est prévue une fente (61), à travers laquelle s'écoulement, pendant l'application du premier matériau de surface (31), un fluide, notamment de l'air, le recouvrement d'outil (60) étant étanché au niveau de son arête (62) opposée à la nervure (54) par rapport à l'outil de formage (50) et présentant à cet endroit des ouvertures à travers lesquelles est guidé le fluide (63).
